(19) Europäisches Patentamt
European Patent Office
Office européen des brevets

(11) Publication number: **0 198 484 A2**

(12) # EUROPEAN PATENT APPLICATION

(21) Application number: 86105230.6

(22) Date of filing: 16.04.86

(51) Int. Cl.⁴: H 01 M 4/60, H 01 M 10/40

(30) Priority: 17.04.85 JP 80280/85
19.08.85 JP 181511/85

(43) Date of publication of application: 22.10.86 Bulletin 86/43

(84) Designated Contracting States: CH DE FR GB IT LI NL SE

(71) Applicant: HITACHI, LTD., 6, Kanda Surugadai 4-chome Chiyoda-ku, Tokyo 100 (JP)
Applicant: SHOWA DENKO K.K., 13-9, Shiba Daimon 1-chome, Minato-ku, Tokyo 105 (JP)

(72) Inventor: Fujita, Kazunori, 2650-24, Muramatsu Tokaimura, Naka-gun Ibaraki-ken (JP)
Inventor: Nishimura, Shigeoki, 2577-87, Higashiisikawa, Katsuta-shi (JP)
Inventor: Sugimoto, Hiroyuki, 20-1, Mizukicho-2-chome, Hitachi-shi (JP)
Inventor: Matsuda, Shinpei, 1722-7, Shirakata Tokaimura, Naka-gun Ibaraki-ken (JP)
Inventor: Ebato, Noboru, 6-5, Okubocho-4-cghome, Hitachi-shi (JP)
Inventor: Tohyama, Atsuko, 7-6-403, Omikacho-6-chome, Hitachi-shi (JP)

(74) Representative: Patentanwälte Beetz sen. - Beetz jun. Timpe - Siegfried - Schmitt-Fumian, Steinsdorfstrasse 10, D-8000 München 22 (DE)

(54) **Secondary battery.**

(57) A secondary battery comprising an electroconductive polymer as an electrode active material for a positive electrode (1), a lithium alloy as a negative electrode (2), and an electrolytic solution composed of a solvent mixture of propylene carbonate and an ether-based solvent containing a lithium complex salt in a dissolved state, the polymer comprising polyaniline having an aniline structure in the main chain where doping of anions from the electrolytic solution is carried out at charging and undoping of the anions is carried out at discharging has a low self discharge rate and a long charge-discharge cycle life.

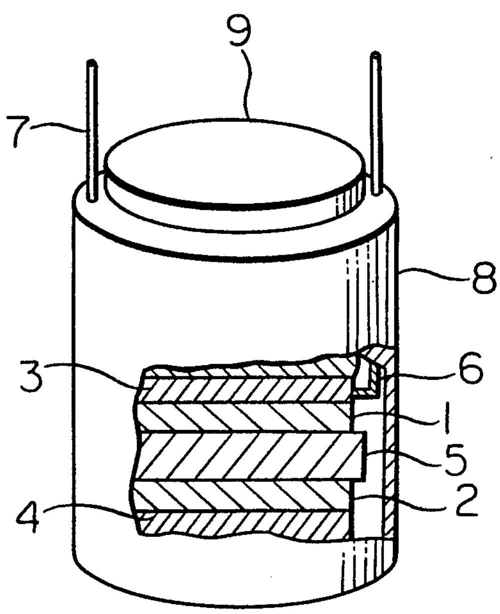


EP 0 198 484 A2

# SECONDARY BATTERY

## BACKGROUND OF THE INVENTION

### FIELD OF THE INVENTION

This invention relates to a secondary battery using an electroconductive aniline polymer as an electrode active material for the positive electrode.

### DESCRIPTION OF THE PRIOR ART

Rechargeable batteries, i.e. secondary batteries have been recently regarded as very important and extensively studied and disclosed in so many reports, typical of which is a secondary battery using an electroconductive polymer as an electrode active material. It is known to use polyacetylene as an electroconductive polymer [Japanese Patent Application Kokai (Laid-open) No. 56-136,469 corresponding to U.S. Patents Nos. 4,321,114 and 4,442,187], where polyacetylene is used as an electrode active material for both positive and negative electrodes, and p-type electroconductive polyacetylene and n-type electroconductive polyacetylene are formed at charging by doping the positive electrode with anions such as $ClO_4^-$, $PF_6^-$, $BF_4^-$, etc., and the negative electrode with cations such as $(C_4H_9)_4N^+$, etc., respectively, and the electrodes are undoped from these ions at discharging.

A secondary battery using polypyrrole as an electrode active material for the positive electrode, and a secondary battery using polythiophene or

polyphenylquinoline as an electrode active material for the positive electrode and the negative electrode are also known. All the foregoing secondary batteries use an electrolytic solution of non-aqueous solvent system, and any of these secondary batteries has a short cycle life and a large self discharge, and thus have not been practically utilized yet.

On the other hand, electrochemical behaviors of polyaniline have been recently reported and application of polyaniline as an electrode active material for a secondary battery has been tried. Polyaniline can be polymerized from an aqueous acidic solution of aniline by electrolytic oxidation reaction, and the polymer film formed on an electrode by the polymerization shows reversible oxidation-reduction reaction in an aqueous acidic solution containing a supporting electrolyte and is electrochemically active. It has been known that the electroconductivity of polyaniline in a dry state changes from $10^{-15}$ to $10^{-1}$ $S \cdot cm^{-1}$.

It is also known that a battery using the said electrochemically synthesized polyaniline as an electrode active material for the positive electrode, and using a zinc negative electrode and an aqueous 1 M $ZnSO_4$ solution or the aqueous solution containing sulfuric acid to lower the pH as an electrolytic solution is rechargeable, and the open circuit voltage after the charging is 1.2 to 1.6 V [Abstract of Presentation, B325, the 50th Meeting of the Electrochemical Society of Japan, March 29-31 (1983)]. The battery uses an aqueous solution as an electrolytic solution,

but the battery voltage is low, as mentioned above, and the dendritic deposition of zinc is inevitable at the charging, causing peeling-off at the electrode or short circuits between the electrodes, and the function as a secondary battery can be hardly attained.

Another secondary battery using polyaniline synthesized from an aqueous 2 M $HClO_4$ solution containing aniline by electrolysis on platinum at a constant potential as an electrode active material for the positive electrode, and using a metallic lithium negative electrode and a propylene carbonate solution containing 1 mole/ℓ of lithium perchlorate as an electrolytic solution is also known, and the open circuit voltage after the charging of the secondary battery is 3.6 to 4.0 V. 100% coulombic efficiency is obtained at 50 cycles in the charge-discharge cycle tests with a maximum capacity of 56% (The 24th Battery Symposium in Japan, p. 197, November 10-11, 1983, Osaka). This secondary battery has a high battery voltage as mentioned above, and also has a high energy density, but has a very short cycle life owing to the dendritic deposition of metallic lithium at the charging. According to the studies made by the present inventors, this secondary battery is much susceptible to self discharge.

SUMMARY OF THE INVENTION

OBJECT OF THE INVENTION

An object of the present invention is to provide a secondary battery having less self discharge and a long

charge-discharge life.

STATEMENT OF THE INVENTION

According to the present invention, there is provided a secondary battery characterized by comprising the following electrode active material for the positive electrode, the following negative electrode and the following electrolytic solution:

(1) Electrode active material for the positive electrode: polyanilive having an aniline structure in the main chain where an atomic ratio of hydrogen to carbon is 0.75 to 0.85 on average, an atomic ratio of nitrogen to carbon is 0.15 to 0.18 on average, and $X^-$ is an anion;

(2) Negative electrode: lithium alloy, and

(3) Electrolytic solution: an electrolytic solution comprising propylene carbonate and an ether-based solvent and further containing a lithium complex salt in a dissolved state.

The present inventors have found that, when the said polyaniline is used as an electrode active material for the positive electrode, reaction to make anion doping at charging and anion undoping (anion withdrawal from polyaniline) at discharging can be carried out, and further have found that the self discharge can be reduced and consequently the cycle life and the coulombic efficiency of the secondary battery can be considerably increased. In the present invention, $ClO_4^-$, $PF_4^-$, $BF_4^-$, $AsF_6^-$, etc. can be used as anions.

The said polyaniline can be obtained, for example,

by electrochemical oxidative polymerization of aniline, using an aqueous $HBF_4$ solution containing aniline and platinum as an electrode, or by chemical synthesis of polyaniline by adding an oxidizing agent such as ammonium persulfate, etc. to an aqueous $HBF_4$ solution containing aniline.

The composition of said polyaniline is determined by thermally decomposing the polyaniline, measuring the resulting gas components, i.e. $N_2$, $CO_2$ and $H_2O$ by gas chromatography and calculating the amounts of carbon, nitrogen and hydrogen, and shows average numerical values.

The general structural formula of the polyaniline is represented by the following formula (1):

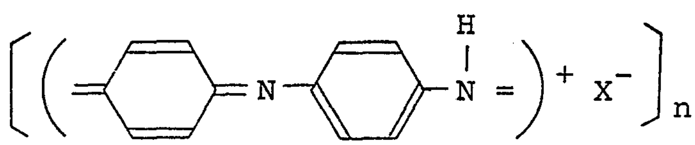

(1)

The polyaniline includes the following structural formula as a modified embodiment of the said structural formula (1).

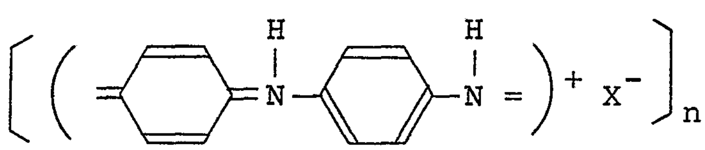

In the foregoing structural formulae, $X^-$ means an anion, and n is at least 20, and preferable at least 40.

It has been found by elemental analysis that the polyaniline obtained by the electrochemical or chemical

synthesis from the aqueous $HBF_4$ solution containing aniline has the following structural formula (2):

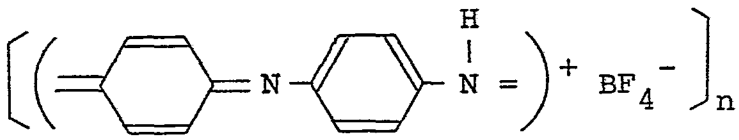

(2)

When the polyaniline having the structural formula (2) is used as an electrode active material for the positive electrode, and when doping with anion $BF_4^-$ is carried out at charging and undoping of $BF_4^-$ is carried out at discharging, the reaction can be shown by the following equation:

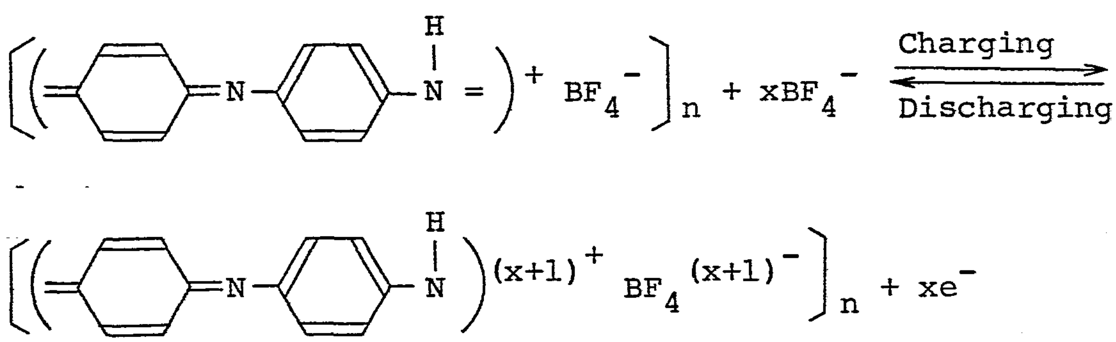


The electroconductivity of polyaniline having the structural formula (2) is 5 $S \cdot cm^{-1}$ in a dry state, and changes ultimately to 0.1 $S \cdot cm^{-1}$ with undoping by an electrolytic solution as shown in Fig. 1. It has been also experimentally found that the polyaniline has a distinguished electroconductivity even in a discharging state as an electrode active material.

The positive electrode can be prepared by mixing powders of an electrode active material composed of

polyaniline having the said structural formula (1), obtained by electrochemical or chemical synthesis, with powders of an electroconductive material such as acetylene black, etc. together with a binder such as polytetrafluoroethylene, and molding the mixture under pressure. Most preferably, the electrode active material is composed only of polyaniline having the said structural formula (1). So long as the electrode active material is composed of polyaniline having the said structural formula (1), doping or undoping of anions can be carried out. It is preferable that the electrode active material contains 50 to 100% by weight of polyaniline having the said structural formula (1).

Polyanilines having other structural formulae than the said structural formula (1) are hardly susceptable or quite unsusceptible to doping of anions, and thus have no effect on prolongation of the cycle life. To obtain the polyaniline having the said structural formula (1), it is necessary that an atomic ratio of hydrogen to carbon is 0.75 to 0.85 on average, and an atomic ratio of nitrogen to carbon is 0.15 to 0.18 on average.

The lithium alloy for the negative electrode is preferably composed of at least one of aluminum, silicon, and magnesium, and lithium, and particularly preferable is an alloy of lithium and aluminum. The amount of lithium is preferably in a range of 20 to 80% by atom in anyone of the alloys. Japanese Patent Application Kokai (Laid-open) No. 56-86463 discloses use of a Li alloy containing

Al, Si, Pb, Mg, Sn, Na, Bi, Cd, Ca, Co, Cu, Ag or the like as a negative electrode in a battery containing an organic solvent, and Japanese Patent Application No. 57-98977 discloses use of a Li-Mg alloy.

In the present invention, these alloys can be used. In case of single lithium, dendritic deposition of lithium takes place at charging, and consequently the cycle life becomes shorter. In an experiment using an alloy of lithium and aluminum as a negative electrode in a secondary battery, no dendritic deposition of lithium has been observed at all.

In the present invention, an electrolytic solution containing a lithium salt as an electrolyte in a mixture of propylene carbonate and an ether-based solvent is used. It is preferable to use $LiBF_4$, $LiPF_6$, $LiClO_4$, $LiAsF_6$, etc. as a lithium salt. The ether-based solvent for use in the present invention includes dimethoxyethane, dimethoxymethane, etc., where dimethoxyethane is most preferable.

When an electrolytic solution containing no ether-based solvent is used, the self discharge occurs, or the coulombic efficiency is lowered.

It seems that this is due to decomposition of propylene carbonate at the charging and the decomposition products deteriorate the polyaniline. It has been found that the decomposition of propylene carbonate can be reduced and the amount of decomposition is not more than

one-fourth at the charging by using a solvent mixture of propylene carbonate and the ether-based solvent. It is well known that by using the ether-based solvent together, the viscosity of the electrolytic solution is lowered, and the electrolyte is more readily diffusible. This also leads to lowering of the electric resistance and improvement of the electroconductivity, and thus the charging voltage can be made by 0.2 to 0.5 V lower. The lowering of the charging voltage can much enhance the effect of suppressing of propylene carbonate decomposition at the charging.

Fig. 8 shows relationship between the electroconductivity and the propylene carbonate concentration in a solvent mixture of propylene carbonate and dimethoxyethane containing 1 M $LiClO_4$, and Fig. 9 shows relationship between the viscosity of an electrolytic solution and the propylene carbonate concentration at the electrolytic solution temperature of 25°C. From these Figs. 8 and 9 it can be seen that the preferable propylene carbonate concentration is in a range of 20 to 80% by volume.

It is most preferable that the polyaniline as an electrode active material for the positive electrode is in a fiber form. Polyaniline in a fiber form can be obtained by electrochemical synthesis. Even in preparing polyaniline by chemical synthesis, polyaniline in a fiber form can be obtained by keeping the temperature of the aqueous solution containing aniline at least at about 40°C. The polyaniline fibers obtained by these syntheses have such dimensions as about 1,000 to about 3,000 Å in diameter and

a few to ten-odd μm long. When the temperature of the aqueous solution containing aniline is about 20°C or lower in the chemical synthesis, the resulting polyaniline takes a globular form. The present inventors have found that, when the polyaniline in a fiber form is used as an electrode active material for the positive electrode, the doping ratio of anion becomes considerably higher and the charge-discharge cycle life becomes longer than when the globular polyaniline is used.

In assembling a secondary battery, it is preferable to use a porous separator and retain the electrolyte in the pores in the separator. It is also preferable to use an electrically insulating material such as polypropylene carbonate or glass filter as the separator.

BRIEF DESCRIPTION OF THE DRAWINGS

Fig. 1 is a characteristic diagram showing relationship between the undoping ratio and the electroconductivity of electrochemically synthesized polyaniline.

Fig. 2 is a characteristic diagram showing a cyclic voltagram of a polyaniline electrode in an electrolytic solution.

Fig. 3 is a characteristic diagram showing charge-discharge curves of a battery using polyaniline as an electrode active material for the positive electrode and a lithium alloy for negative electrode.

Fig. 4 is a characteristic diagram showing relationship between the coulombic efficiency and the cycle

number, i.e. the cycle life.

Figs. 5 and 6 are characteristic diagrams showing the self discharge rate and charge-discharge cycle characteristic of the present secondary battery in comparison with those of a secondary battery using polyacetylene as an electroconductive polymer.

Fig. 7 is a perspective view showing a secondary battery according to one embodiment of the present invention.

Fig. 8 is a characteristic diagram showing relationship between the electroconductivity and the propylene carbonate concentration of an electrolytic solution.

Fig. 9 is a characteristic diagram showing relationship between the viscosity and the propylene carbonate concentration of an electrolytic solution.

PREFERRED EMBODIMENTS OF THE INVENTION

Example 1

Electrolysis was carried out in an aqueous 0.5 M $HBF_4$ solution containing 0.1 M aniline, using platinum as a working electrode and a counterelectrode, while keeping the potential of the working electrode at 0.8 V against a silver-silver chloride reference electrode, whereby polyaniline was formed on the platinum of the working electrode. The formed polyaniline was scraped off, washed with water, dried in vacuum, and pulverized. It was found by a scanning type, electron microscope that the thus

obtained powders were in a fiber form. Elemental analysis of carbon, hydrogen and nitrogen revealed that the atomic ratio of hydrogen to carbon was 0.75 to 0.85, and that of nitrogen to carbon was 0.15 to 0.18, and the structural formula was as given by the said formula (2).

The polyaniline powders were molded into a pellet, 9 mm in diameter, under the pressure of 100 $kg/cm^2$, and the resistance of pellet was measured by 4-probe method. It was found that the electroconductivity was 3.8 to 5.0 $S{\cdot}cm^{-1}$.

The polyaniline pellet was used as a working electrode, and platinum as a counterelectrode to conduct cyclic voltametry in a solvent mixture of propylene carbonate and dimethoxyethane (1 : 1 by volume) containing 1 M $LiBF_4$. The results are shown in Fig. 2, where an oxidation current (shown by a dotted line) and a reduction current (shown by a full line) were observed.

The positive current, i.e. oxidation current, shows a doping of polyaniline with $BF_4^-$, and the negative current, i.e. reduction current, shows an undoping of $BF_4^-$ from the polyaniline. When the polyaniline is used as an electrode active material for the positive electrode, the former doping corresponds to a charging and the latter undoping to a discharging.

A ratio of electric quantity of doping to that of undoping, i.e. coulombic efficiency, was substantially 100% in the present example.

Example 2

The polyaniline prepared in Example 1 was mixed with 11% by weight of carbon (acetylene blads) on the basis of the polyaniline and further with polytetrafluoroethylene as a binder. The mixture was molded into a pellet, 9 mm in diameter, under the pressure of 100 $kg/cm^2$. The thus obtained pellet was used as a positive electrode. A battery was built of the positive electrode, an alloy of 80% Li - 20% Al by atom as a negative electorde, and a solvent mixture of propylene carbonate and dimethoxyethane (1 : 1 by volume) containing 1 M $LiBF_4$ as an electrolytic solution. The doping ratio of $BF_4^-$ to the polyaniline was made 20% by mole/aniline unit.

In Fig. 3, the curve A shown by a full line shows changes in the charging voltage at charging-discharging at a constant current after the discharge at 5 $mA/cm^2$ until the battery voltage reached 1.5 V. The curve A' likewise shows changes in the discharging voltage. In this example, an open circuit voltage of 3.0 V was obtained. Results of charge-discharge test under the said conditions are shown by the curve C in Fig. 4, where the cycle number reached 630. After the end of 25th charging, the battery was kept in an open circuit state, and left standing for 24 hours. Then, discharging was conducted under the same conditions as those for the charging, and the self-discharge rate was determined from its electric quantity and found to be 4.5%/day.

Comparative Example 1

The polyaniline powders prepared in Example 1 was dipped and stirred in an aqueous 1 M KOH solution for 5 hours, then washed with water and dried in vacuum. Then, a portion of the polyaniline powders were molded into a pellet, 9 mm in diameter, under the pressure of 100 $kg/cm^2$, and the resistance was measured by 4-probe method. The electroconductivity was found to be about $10^{-8}$ $S \cdot cm^{-1}$. The remaining portion of polyaniline powders were mixed with 11% by weight of carbon (acetylene blads) on the basis of polyaniline, molded into a pellet, 9 mm in diameter, under the said conditions, and used as a positive electrode in a battery built in the same manner as in Example 1. The battery was tried to undergo discharging under the same conditions as in Example 1, but no discharging was attained.

In comparative Example 1, no anions were taken into the polyaniline and it can been seen that the battery fails to act as a secondary battery. Failure to dope with the anions in this case seems to be due to the fact that the polyaniline has a different structural formula from the said formula (1).

Example 3

Ammonium persulfate [$(NH_4)_2S_2O_7$] was added to an aqueous 1 M $HBF_4$ solution containing 0.2 M aniline kept at 40°C so as to make 1 M $(NH_4)_2S_2O_8$, and the mixture was stirred and left standing for 5 hours. The resulting

precipitates were washed with water, and dried in vacuum to obtain polyaniline powders. It was found by a scanning type electron microscope that the powders were in a fiber form.

The powders were molded into a pellet, 9 mm in diameter, under the pressure of 100 $kg/cm^2$, and the resistance was measured by 4-probe method. The electroconductivity was found to be 2.6 $S \cdot cm^{-1}$.

The polyaniline powders obtained by the chemical synthesis were mixed with carbon and polytetrafluoroethylene in the same manner as in Example 2, and the mixture was molded into a pellet under the same conditions as in Example 2. The pellet was used as a positive electrode in a battery build in the same manner as in Example 2, and the battery was subjected to a battery test under the same conditions as in Example 2. The charge-discharge cycle number where 100% coulombic efficiency could be obtained was 720. The self discharge rate of the battery was 4.8%/day.

Comparative Example 2

A battery was built of the same positive electrode and negative electrode as used in Example 2, and a propylene carbonate solvent containing 1 M $LiBF_4$ as an electrolytic solution. Battery test was carried out under the same conditions as in Example 2. Changes in the charging-discharging voltage at a constant current with the current density of 5 $mA/cm^2$ are shown by the curves

B and B' in Fig. 3, where the dotted curve B shows changes in charging voltage at the charging-discharging at the constant current in this Comparative Example 2, and the dotted line B' likewise shows changes in the discharging voltage. It can be seen that the curves B and B' (dotted lines) according to the present Comparative Example 2 are poor in voltage flatness, as compared with the curves A and A' (full lines) according to Example 2.

The coulombic efficiency according to the present Comparative Example 2 is shown by a plot D in Fig. 4.

The charge-discharge cycle number where the coulombic efficiency could be kept 100% was 183. The self discharge rate in the present Comparative Example 2 was 8%/day.

It can be seen from the present Comparative Example 2 that the secondary battery using only propylene carbonate as an electrolytic solution is poor in the durability and the voltage characteristics, because it seems that a high viscosity of propylene carbonate makes its wetting on the electrodes insufficient.

Comparative Example 3

A secondary battery was built in the same manner as in Example 2, except for the negative electrode. A metallic lithium foil was used as the negative electrode. Battery tests were carried out under the same conditions as in Example 2. The open circuit voltage of the battery was almost equal to that of Example 2, whereas the charge-discharge cycle number was about 120 to about 150.

It can be seen from the present Comparative Example 3 that the thorough durability can be hardly obtained when a pure lithium metal is used as a negative electrode.

Example 4

Secondary batteries were built in the same manner as in Example 2 except for the negative electrode. A lithium-aluminum alloys having the following compositions were used as negative electrodes for the batteries.

(i) 20% Li-80% Al by atom

(ii) 40% Li-60% Al by atom

(iii) 50% Li-50% Al by atom

Battery tests were carried out under the same conditions as in Example 2. The open circuit voltages of the batteries using the negative electrodes (i), (ii) and (iii) were all by 0.2 to 0.4 V lower than the open circuit voltage of the battery according to Example 2. The charge-discharge cycle number where substantially 100% coulombic efficiency could be obtained and the self discharge rate are as follows:

Battery using the negative electrode (i):

Cycle number: 764

Self discharge rate: 3.5%/day

Battery using the negative electrode (ii):

Cycle number: 1,162

Self discharge rate: 4.0%/day

Battery using the negative electrode (iii):

Cycle number: 1,320

Self discharge rate: 4.4%/day

Example 5

A secondary battery was built in the same manner as in Example 2 except for the negative electrode. A lithium alloy of 98% Li-2% Al by atom was used as the negative electrode. After discharging at the current density of 5 $mA/cm^2$, charging was carried out, so that the doping ratio of $BF_4^-$ to polyaniline might be 20% by mole/aniline unit. Then, the battery was put into an open circuit state for 15 hours, and discharged. By letting the charging-standing in the open circuit-discharging be one cycle, the battery test was repeated. The cycle number where the coulombic efficiency of at least 90% was obtained was 428, and the self discharge rate was 3.8%/day.

Example 6

A secondary battery was built in the same manner as in Example 2, except for the electrolytic solution. A solvent mixture of propylene carbonate-dimethoxyethane (1 : 1 by volume) containing 1 M $LiClO_4$ was used as the electrolytic solution. The battery test was carried out under the same conditions as in Example 2, and the charge-discharge cycle number where 100% coulombic efficiency was obtained was 736, and the self discharge rate of the battery was 3.5%/day.

Example 7

Electrolytic oxidation was carried out at room temperature in an aqueous 0.5 M $HBF_4$ solution containing 0.1 M aniline, using platinum as a working electrode and a counterelectrode, while keeping the potential of 0.9 V against a silver-silver chloride reference electrode, whereby polyaniline was formed on the working electrode. The polyaniline was scraped off the electrode, washed with water, dried in vacuum at 80°C, and pulverized. It was found in the picture of the thus obtained polyaniline taken by a scanning type electron microscope (magnification: x 10,000) that it was in a fiber form having a diameter of about 1,500 Å.

The thus obtained polyaniline powders were mixed with 10% by weight of acetylene black and then with polytetrafluoroethylene as a builder. The mixture was molded into a pellet, 9 mm in diameter, and a battery was built of the thus obtained pellet as a positive electrode, a solvent mixture of propylene carbonate and dimethoxyethane (1 : 1 by volume) containing 1 M $LiBF_4$, an alloy of 50% Li-50% Al by atom as a negative electrode, and polypropylene as a separator between the electrodes. After the battery was once discharged, it was charged at the current density of 1 $mA/cm^2$, whereby the doping ratio of $BF_4^-$ to the polyaniline of 67% by mole/aniline unit was obtained.

Furthermore, the battery was subjected to a charge-discharge cycle test where the doping ratio was made

30% by mole/aniline unit, the charging was carried out at the current density of 1 mA/cm$^2$, and the discharging was carried out at the same current density as above until the battery voltage reached 1 V. The coulombic efficiency, i.e. a ratio of charging electric quantity to discharging electric quantity, was 99% or higher even after 730 cycles, and the open circuit voltage after the end of charging the battery was 3.5 V.

Example 8

Electrolytic oxidation was carried out in an aqueous 1 M $H_2SO_4$ solution containing 0.1 M aniline under the same conditions as in Examp;le 7, and polyaniline powders were obtained by the same post-treatment as in Example 7. It was found in the picture of the thus obtained polyaniline powders taken by a scanning type, electron microscope that it was in a fiber form.

A battery was built in the same manner as in Example 7, using the polyaniline, and a doping ratio of $BF_4^-$ to the polyaniline was determined. It was found to be 58% by mole/aniline unit. In the same charge-discharge cycle test, at least 740 cycles could be attained with the coulombic efficiency of 99%.

Example 9

An aqueous 0.1 M ammonium persulfate [$(NH_4)_2S_2O_7$] solution was added to an aqueous 0.5 M $HBF_4$ solution containing 0.2 M aniline over 1.5 hours while keeping the

temperature at 40°C, whereby polyaniline was prepared. The thus obtained polyaniline was washed with water, dried in vacuum at 80°C, and pulverized. It was found in the picture of the polyaniline prepared by the chemical oxidation at the high temperature by a scanning type electron microscope (magnification: x 10,000) that the polyaniline was in a fiber form, where the fiber diameter was about 1,500 Å.

A battery was built in the same manner as in Example 7, using the polyaniline, and the doping ratio of $BF_4^-$ to the polyaniline was determined. It was found to be 62% by mole/aniline unit. In the same charge-discharge cycle test, at least 680 cycles were obtained at the coulombic efficiency of 99%.

Example 10

Chemical oxidation was carried out in an aqueous 1 M $H_2SO_4$ solution containing 0.1 M aniline under the same conditions as in Example 9, and polyaniline powders were obtained by the same post-treatment as in Example 9. The morphology of the thus obtained polyaniline by a scanning type electron microscope was in a fiber form, where the fiber diameter was about 2,000 Å.

A secondary battery was built in the same manner as in Example 8, using the thus obtained polyaniline, and the doping ratio of $BF_4^-$ to the polyaniline was determined. It was found to be 60% by mole/aniline unit. In the same charge-discharge cycle test, at least 665 cycles were

obtained at the coulombic efficiency of 99%.

Example 11

An aqueous 0.1 M ammonium persulfate solution was added to an aqueous 0.5 M $HBF_4$ solution containing 0.2 M aniline over 1.5 hours while keeping the temperature at 20°C to prepare polyaniline. Then, the polyaniline was washed with water, dried at 80°C in vacuum, and pulverized. It was found in the picture of the thus obtained polyaniline taken by a scanning type electron microscope (magnification: x 10,000) that the morphology of the polyaniline was in a fine globular state.

A secondary battery was built in the same manner as in Example 7, using the polyaniline, and a doping ratio of $BF_4^-$ to the polyaniline was determined. It was found to be 34% by mole/aniline unit. In the same charge-discharge test as in Example 7, coulombic efficiency started to decrease after 180th cycle.

Example 12

Figs. 5 and 6 show comparison of properties of secondary batteries using polyaniline in a fiber form and polyacetylene in a fiber form as electroconductive polymers. For the positive electrode in the present secondary battery the polyaniline obtained in Example 7 was used, and the structures of the batteries were identical with each other between the present invention using the polyaniline as an electrode active material for the

positive electrode and the comparative battery using polyacetylene as an electrode active material for the positive electrode, and is shown in Fig. 7.

Fig. 7 is a perspective, partly cutaway view of a secondary battery, where numeral 1 is a positive electrode, 2 a negative electrode, 3 is a current collector for the positive electrode, and 4 a current collector for the negative electrode. The current collectors 3 and 4 are composed of austenite stainless steel, for example, 18 wt. % Cr-8 wt. % Ni steel, or an expanded metal. In this Example, the stainless steel was used. Numeral 5 is a separator composed of a porous, electrically insulating material, and an electrolytic solution is retained in the pores. As a material for the separator, for example, polypropylene carbonate, glass filter, etc. can be used. In this Example, polypropylene carbonate was used.

Numeral 6 is a current collector terminal at the positive electrode, and 7 is a current collector terminal at the negative electrode. These terminals were composed of austenite stainless steel containing 18 wt. % Cr and 8 wt. % Ni. Numeral 8 is a battery casing, and 9 is a cap. The cap 9 had a male thread on the outer periphery, whereas the battery casing 8 had a female thread on the inside periphery to engage with the thread of the cap 9. By screwing the cap 9, the positive electrode 1 was pressed toward the negative electrode 2. The battery casing and the cap were composed of polytetrafluoroethylene.

Doping ratio was 20% by mole/aniline unit (3%

by mole/carbon unit) for the present battery using polyaniline and 4% by mole/carbon unit for the comparative battery using polyacetylene.

In Fig. 5, the abscissa shows a discharge time (hr) and the ordinate shows a self charge rate (%), where E is directed to the present battery using polyaniline and F to the comparative battery using polyacetylene.

In Fig. 6, the abscissa shows cycle number where one cycle consists of a charge-standing for one hour-discharge (current density: 5 mA/$cm^2$), and the ordinate shows a coulombic efficiency (%), where E is directed to the present battery using polyaniline and F to the comparative battery using polyacetylene. The comparative battery using polyacetylene had a high self discharge rate, where the coulombic efficiency (%) was lowered at a few tens of cycle, whereas the present battery using polyaniline had a low self discharge rate, i.e. 4.5%/day after the standing time for 90 hours, and the coulombic efficiency (%) was not lowered even after a few hundred of cycles.

WHAT IS CLAIMED IS:

1. A secondary battery which comprises a pair of a positive electrode (1) and a negative electrode (2) of lithium alloy, counterposed against each other, and an electrolytic solution filled therebetween, the positive electrode (1) having an electroconductive polymer as an electrode active material, the electroconductive polymer comprising polyaniline having an aniline structure in the main chain and an atomic ratio of hydrogen to carbon of 0.75 to 0.85 on average and an atomic ratio of 0.15 to 0.18 on average, and the electrolytic solution being composed of a solvent mixture of propylene carbonate and an ether-based solvent containing a lithium complex salt in a dissolved state.

2. A secondary battery according to Claim 1, wherein the electroconductive polymer consists substantially of the said polyaniline.

3. A secondary battery according to Claim 1, wherein the ether-based solvent is dimethoxyethane.

4. A secondary battery according to Claim 1, wherein the lithium alloy is a lithium-aluminum alloy combining 20 to 80% by atom of lithium.

5. A secondary battery according to Claim 1, wherein the lithium complex salt is at least one of $LiBF_4$, $LiPF_6$, $LiClO_4$, and $LiAsF_6$.

6. A secondary battery according to Claim 1, wherein the polyaniline has an electroconductivity of 0.1 or more $S \cdot cm^{-1}$.

7. A secondary battery which comprises a pair of

a positive electrode (1) and a negative electrode (2) of lithium alloy, counterposed against each other, and an electrolytic solution filled therebetween, the positive electrode (1) having an electroconductive polymer as an electrode active material, the electroconductive polymer comprising polyaniline having a fiber form, an aniline structure in the main chain and an atomic ratio of hydrogen to carbon of 0.75 to 0.85 on average and an atomic ratio of 0.15 to 0.18 on average, and the electrolytic solution being composed of a solvent mixture of propylene carbonate and an ether-based solvent containing a lithium complex salt in a dissolved state.

8. A secondary battery according to Claim 7, wherein the electroconductive polymer having a fiber form consists substantially of the said polyaniline.

9. A secondary battery according to Claim 1, wherein the positive electrode (1) is an electrode prepared from a mixture of powders of the said polyaniline and powders of carbon, bound by polytetrafluoroethylene as a binder.

10. A secondary battery which comprises a pair of positive electrode (1) and a negative electrode (2) of lithium alloy, counterposed against each other, an electrolytic solution filled therebetween, and a porous electrically insulating separator (5), the positive electrode (1) having an electroconductive polymer as an electrode active material, the electroconductive polymer comprising polyaniline having an aniline structure in the main chain and an atomic ratio of hydrogen to carbon of 0.75 to 0.85 on average and an

atomic ratio of 0.15 to 0.18 on average, and the electrolytic solution being composed of a solvent mixture of propylene carbonate and an ether-based solvent containing a lithium complex salt in a dissolved state being retained in the separator (5) by impregnation.

11. A secondary battery according to Claim 10, wherein the separator (5) is composed of polypropylene carbonate.

12. A secondary battery according to Claim 10, wherein the polyaniline has a fiber form.

13. A secondary battery according to Claim 12, wherein the fiber is about 1,000 to about 3,000 Å in diameter and a few to ten-odd μm long.

14. A secondary battery according to Claim 10, wherein the positive electrode (1) is an electrode prepared from a mixture of powders of the said polyaniline and powders of carbon, bound by polytetrafluoroethylene as a binder.

15. A secondary battery according to Claim 14, wherein the powders of carbon are powders of acetylene black.

16. A secondary battery which comprises a pair of a positive electrode (1) and a negative electrode (2) of lithium alloy, counterposed against each other, an electrolytic solution filled therebetween, a porous electrically insulating separator (5) provided between the electrodes (1, 2), and current collectors (3, 4) provided adjacent to the positive and negative electrodes (1, 2), respectively, and a current collector terminal (6) connected to the current collector (3) for the positive electrode (1) and a current collector terminal (7) connected to the current collector (4) for the negative electrode (2), the positive

electrode (1) having an electroconductive polymer as an electrode active material, the electroconductive polymer comprising polyaniline having an aniline structure in the main chain and an atomic ratio of hydrogen to carbon of 0.75 to 0.85 on average and an atomic ratio of 0.15 to 0.18 on average, and the electrolytic solution being composed of a solvent mixture of propylene carbonate and an ether-based solvent containing a lithium complex salt in a dissolved state being retained in the separator (5) by impregnation.

17. A secondary battery according to Claim 16, wherein the polyaniline has a fiber form.

18. A secondary battery according to Claim 16, wherein the positive electrode (1) is an electrode prepared from a mixture of powders of the said polyaniline and powders of carbon, bound by polytetrafluoroethylene as a binder.

19. A secondary battery according to anyone of Claims 1, 7, 10 and 16, wherein the solvent mixture has a concentration of 20 to 80% by volume, the balance being the ether-based solvent.

FIG. 1

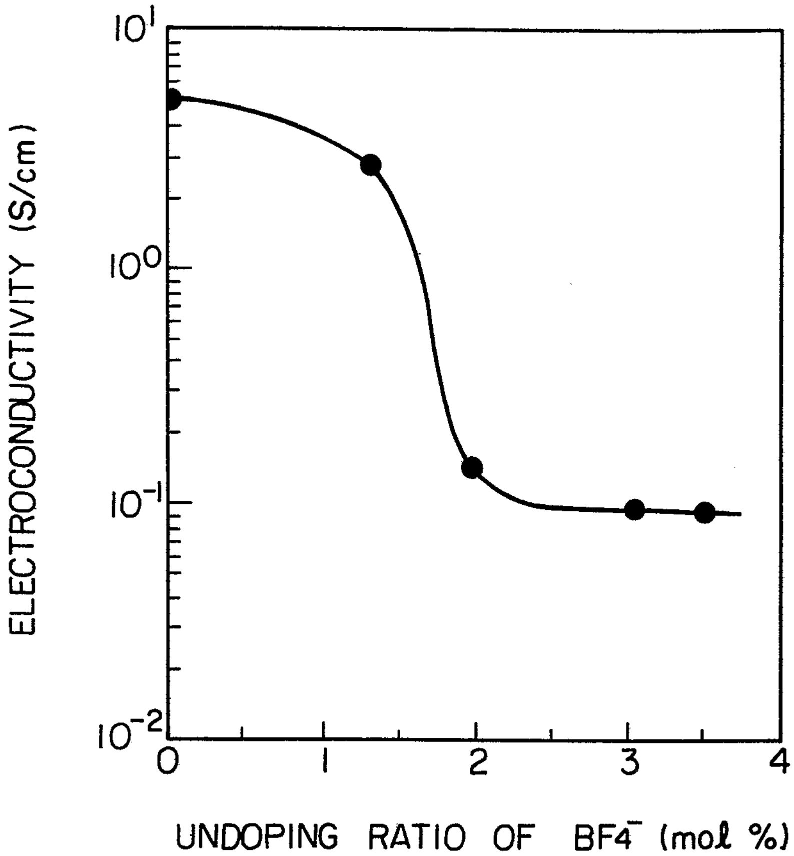
10^1
10^0
10^-1
10^-2
ELECTROCONDUCTIVITY (S/cm)
0
1
2
3
4
UNDOPING RATIO OF BF4^- (mol %)

FIG. 2

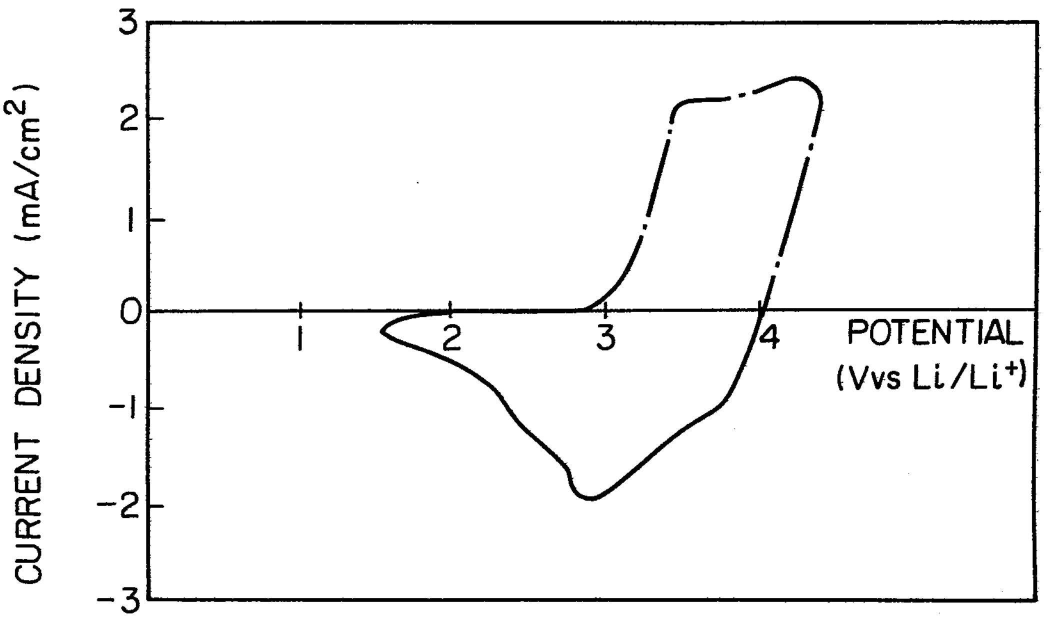
3
2
1
0
-1
-2
-3
CURRENT DENSITY (mA/cm^2)
1
2
3
4
POTENTIAL
(Vvs Li/Li+)

FIG. 3

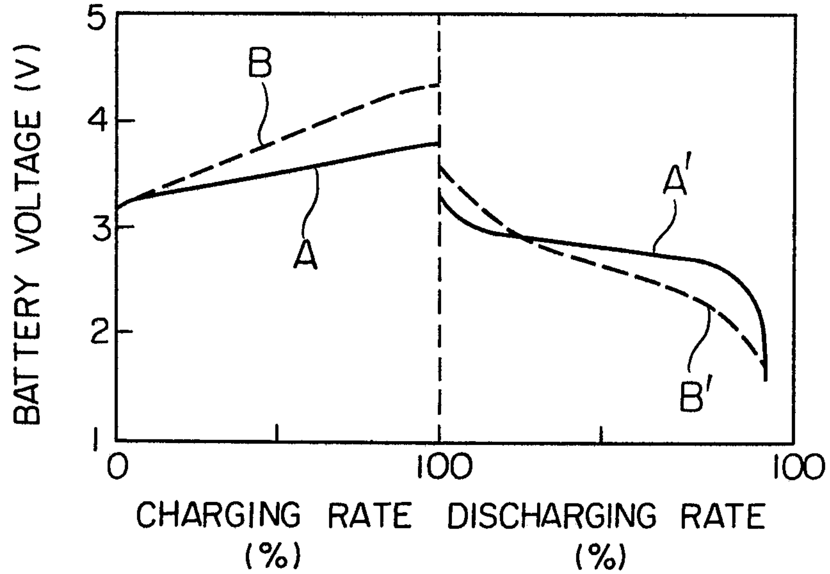
BATTERY VOLTAGE (V)
5
4
3
2
1
0
100
100
B
A
A'
B'
CHARGING RATE (%)
DISCHARGING RATE (%)

FIG. 4

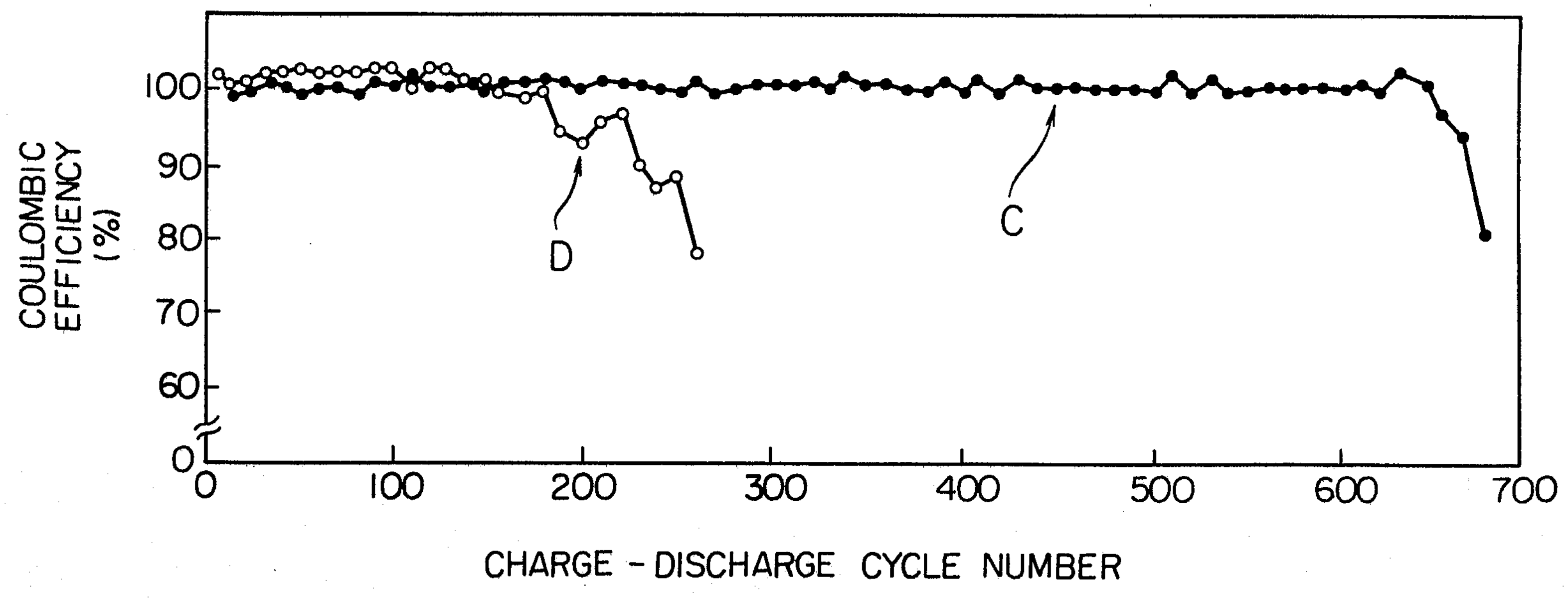
COULOMBIC EFFICIENCY (%)
100
90
80
70
60
0
0
100
200
300
400
500
600
700
C
D
CHARGE - DISCHARGE CYCLE NUMBER

FIG. 5

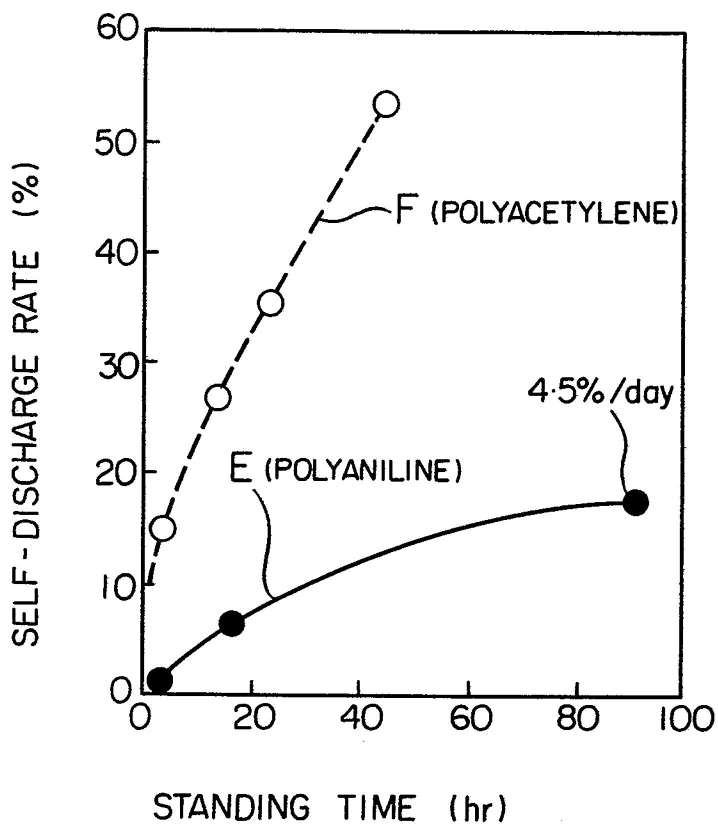
60
50
40
30
20
10
0
SELF-DISCHARGE RATE (%)
0
20
40
60
80
100
STANDING TIME (hr)
F (POLYACETYLENE)
E (POLYANILINE)
4·5%/day

0 198 484



FIG. 6

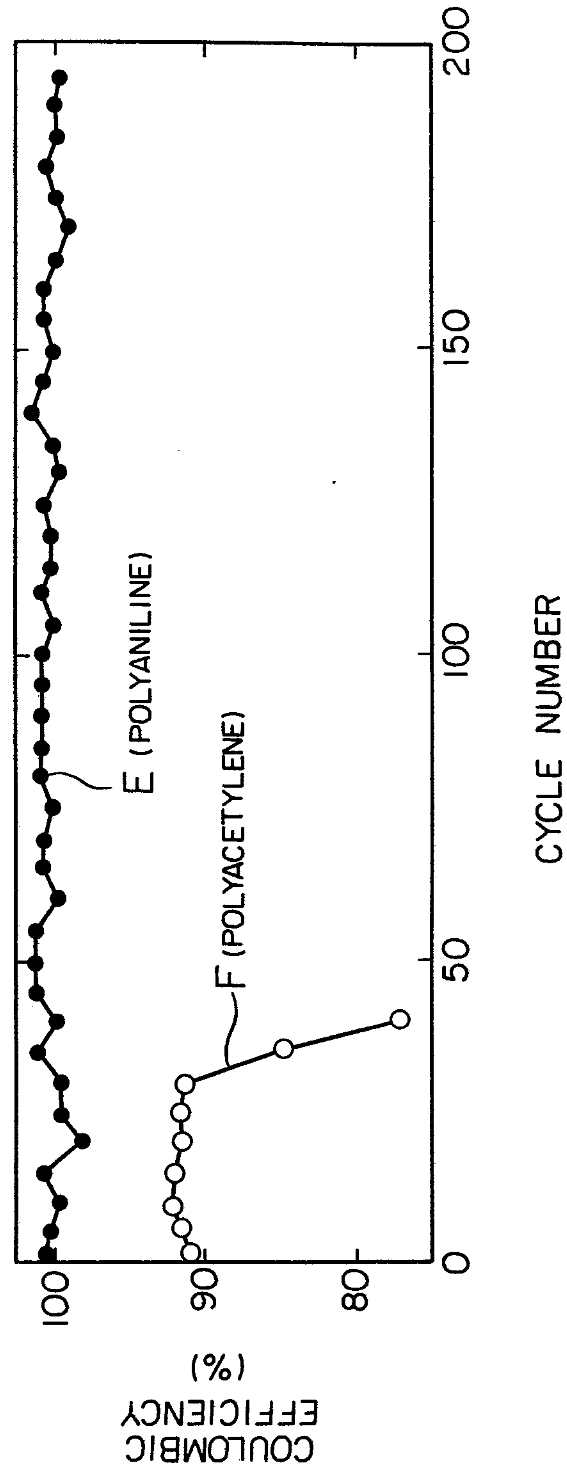

FIG. 7

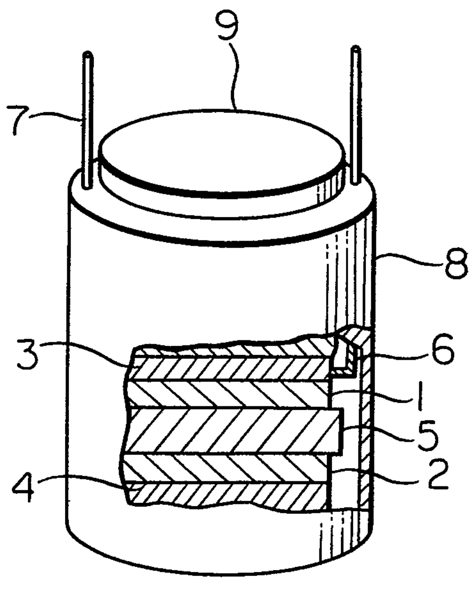

FIG. 8

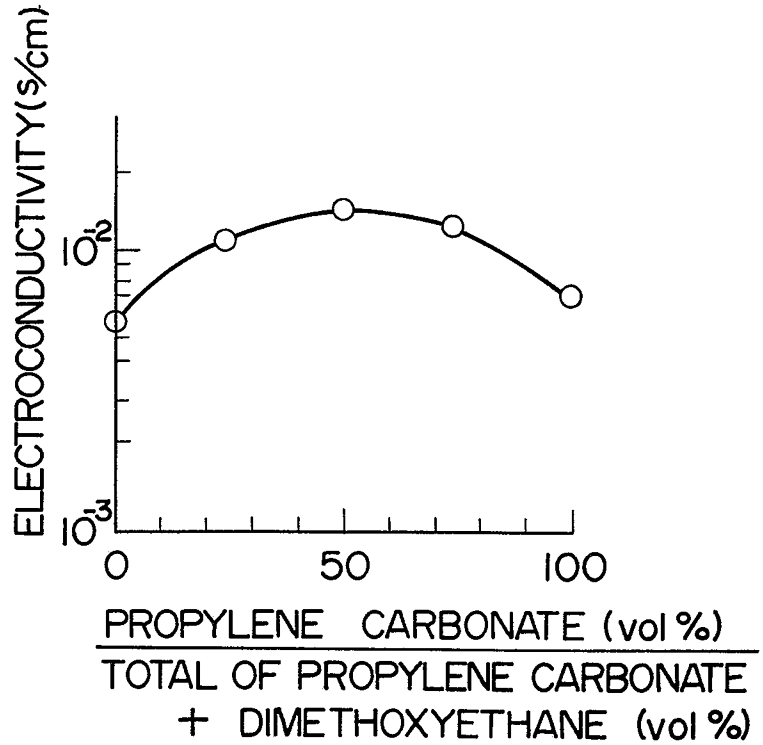
ELECTROCONDUCTIVITY (s/cm)
$10^{-2}$
$10^{-3}$
0
50
100
PROPYLENE CARBONATE (vol %) / TOTAL OF PROPYLENE CARBONATE + DIMETHOXYETHANE (vol %)

FIG. 9

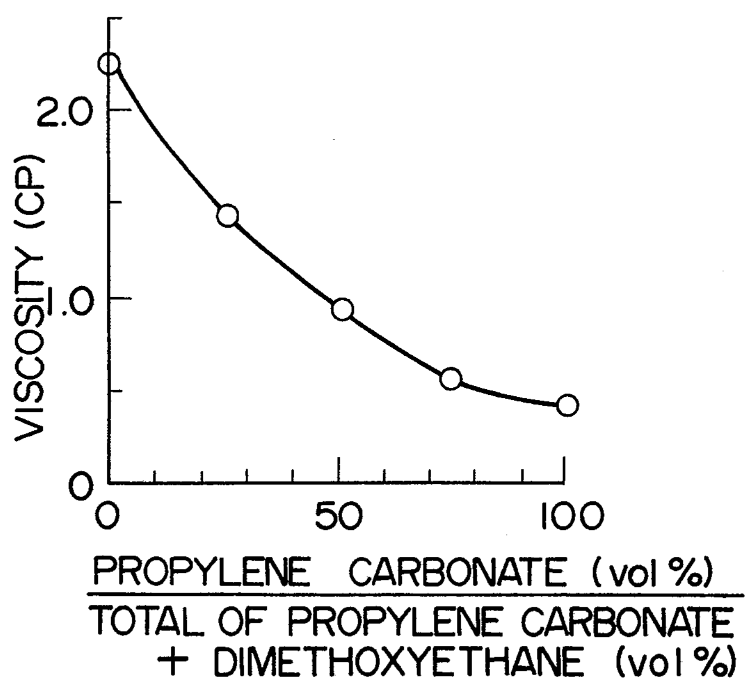
VISCOSITY (CP)
2.0
1.0
0
0
50
100
PROPYLENE CARBONATE (vol %) / TOTAL OF PROPYLENE CARBONATE + DIMETHOXYETHANE (vol %)